# EUROPÄISCHE PATENTSCHRIFT

(11) **EP 0 479 128 B1**
(45) Veröffentlichungstag und Bekanntmachung des Hinweises auf die Patenterteilung: **20.07.1994**
(21) Anmeldenummer: 91116433.3
(22) Anmeldetag: 26.09.1991
(51) Int. Cl.: B21F 27/20, B23K 11/00

(54) **Vorrichtung zum Aufbringen und Verbinden von vorgefertigten Gitterträgern auf eine auf Abstützungen ruhende vorgefertigte Bewehrungsmatte**
Device for applying and joining prefabricated lattice girders to a stationary, supported, prefabricated reinforcement grid
Dispositif d'application et d'assemblage des poutres en treillis préfabriqués sur un grillage d'armature préfabriqué reposant sur un support

(30) Priorität: 04.10.1990 DE 4031383
(43) Veröffentlichungstag der Anmeldung: 08.04.1992
(73) Patentinhaber: Bittlmayer, Hugo, D-91795 Dollnstein (DE)
(72) Erfinder: Bittlmayer, Hugo, D-91795 Dollnstein (DE)
(74) Vertreter: Melzer, Wolfgang, Dipl.-Ing.

(56) Entgegenhaltungen:
- AT-B- 294 534
- FR-A- 1 434 859
- US-A- 3 162 744
- US-A- 4 221 951

## Beschreibung

Die Erfindung bezieht sich auf eine Vorrichtung nach dem Oberbegriff des Anspruchs 1.

Gitterträger werden einer Bewehrungsmatte meistens in mehreren, parallel zueinander verlaufenden Reihen auf Abstand voneinander zugeordnet. Der Längs- und Querabstand zwischen den Gitterträgern ist in der Regel für jede Bewehrungsmatte spezifisch.

Bisher werden die Gitterträger bei der Herstellung der zugehörigen Bewehrungsmatte von Hand aufgelegt und verbunden, wobei die bestimmten Positionen ausgemessen und die Gitterträger an den jeweiligen Positionen angeordnet werden. Diese Herstellungsweise ist umständlich und zeitaufwendig, wordurch nicht hohe Herstellungskosten vorgegeben sind, sondern auch auf Meßfehlern beruhende falsche Anordnungen der Gitterträger passieren können.

Der Erfindung liegt die Aufgabe zugrunde, eine Vorrichtung zu schaffen, mit der die Gitterträger leicht und schnell positionsgenau angeordnet und verbunden werden können.

Diese Aufgabe wird durch die Merkmale des Anspruchs 1 gelöst.

Die erfindungsgemäße Vorrichtung arbeitet halb- oder vollautomatisch, so daß eine Bedienungsperson lediglich Steuerungs- und ggfls. Überwachungsaufgaben zu erfüllen hat. Es wird jeweils ein Gitterträger mit den Halteelementen des Greifers ergriffen, an der richtigen Position auf die Bewehrungsmatte aufgesetzt und dann punktverschweißt. Der Greifer ist über einer die vorzufertigende Bewehrungsmatte tragende Palette horizontal im X/Y-Koordinatensystem und entlang einer senkrecht zu diesem System stehenden Z-Koordinate verfahrbar. Die Bewegung entlang der X-Koordinate erfolgt durch ein Verfahren des sich längs der Y-Koordinate erstreckenden Trägers quer zu sich selbst über die Bewehrungsmatte bzw. Palette. Die Bewegung des Greifers in der Y-Koordinate erfolgt durch eine Verschiebung eines den Greifer tragenden Führungsrahmens am Träger in dessen Längsrichtung. Vorteilhaft ist auch die in Y-Richtung lagerichtige Bereitstellung des Gitterträgers von einer Fertigungseinrichtung, einem Lager oder dgl. und anschließendem Ergreifen durch den Greifer und dessen Bewegung lediglich in X-Richtung. Die Bewegung des Greifers in der Z-Koordinate ist erforderlich, um den jeweiligen Gitterträger über bereits vorhandene Gitterträger hinweg verfahren und absetzen zu können. Der abgesetzte Gitterträger wird mit dem Paar Schweißstempel gegen die Bewehrungsmatte und gegen die gleichzeitig von unten gegen die Bewehrungsmatte geschobene Schweißbrücke gedrückt und verschweißt. Die Schweißbrücke ist im Takt mit dem Greifer im X/Y-Koordinatensystem parallel und entlang der Z-Koordinate gegenläufig zum Greifer bewegbar, so daß sie sich zumindest während einer vom Greifer oder von den Schweißstempeln durchgeführten Druckausübung auf den Gitterträger unterhalb der Druckpunkte befindet und den Druck aufzunehmen vermag.

In den Unteransprüchen sind vorteilhafte Weiterbildungen der Erfindung beschrieben, die ebenfalls zur Lösung des der Erfindung zugrunde liegenden Problems beitragen, eine schnelle und sichere Funktion gewährleisten und von einfacher und praktischer Bauweise sind, die eine kostengünstige Herstellung sowohl der Bewehrungsmatten als auch der Vorrichtung selbst ermöglichen.

Nachfolgend wird die Erfindung anhand eines in einer Zeichnung dargestellten Ausführungsbeispiels näher erläutert.

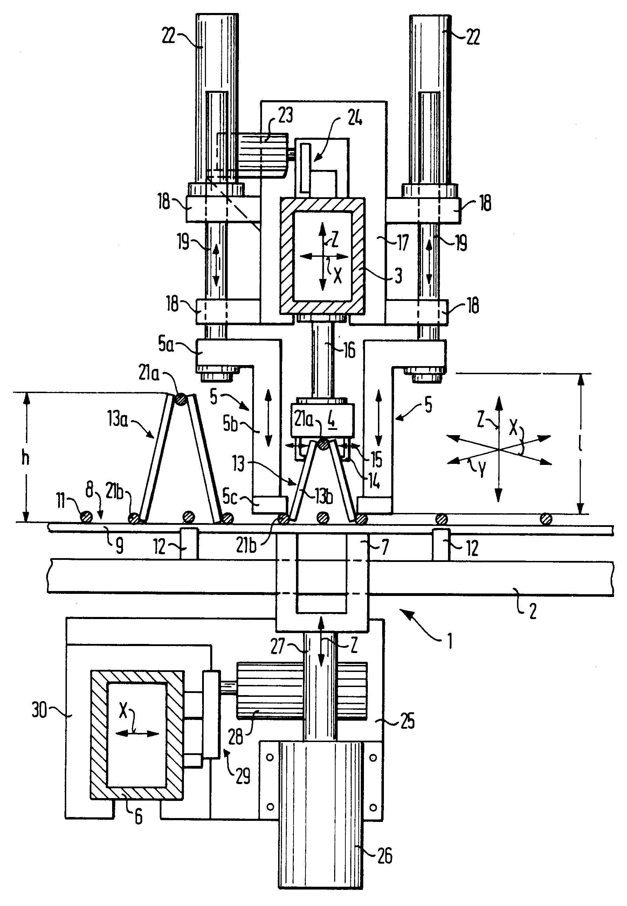

Die Zeichnung zeigt eine erfindungsgemäß ausgestaltete Vorrichtung zum Aufbringen und Verbinden von vorgefertigten Gitterträgern auf eine Bewehrungsmatte im vertikalen Schnitt.

Die Hauptteile der Vorrichtung 1 sind eine horizontal angeordnete Palette 2, ein die Palette 2 überspannender Portalträger mit einer Traverse 3, ein an der Traverse 3 angeordneter Greifer 4, ein Paar ebenfalls an der Traverse 3 gehaltene Schweißstempel 5, eine unter der Palette 2 sich parallel zur obereren Traverse 3 erstreckende untere Traverse 6 und eine an der unteren Traverse 6 angeordnete Schweißbrücke 7, die mit den Schweißstempeln 5 in noch zu beschreibender Weise zusammenwirkt.

Auf der Palette 2 ist eine Bewehrungsmatte 8 mit unteren horizontalen, sich quer zu den Traversen 3,6 erstreckenden Quereisen 9 und darauf sich parallel zu den Traversen 3,6 erstreckenden Längseisen 11, die im bestimmten Raster angeordnet sind. Die Bewehrungsmatte 8 liegt auf Stützteilen 12, die auf der Palette 2 stehen, und sie weist somit einen geringen Abstand von der Oberseite der Palette 2 auf. Bei der Palette 2 kann es sich um eine gitterförmige Leistenkonstruktion handeln, so daß gitterförmige Öffnungen vorgesehen sind, die die Schweißbrücke von unten durchgreift. Es ist der Zweck der Vorrichtung 1, an sich bekannte Gitterträger 13 auf der Oberseite der Bewehrungsmatte 8 in einer bestimmten Position anzuordnen und zu verschweißen. Ein Gitterträger 13 ist in einer am Greifer 4 angeordneten Position auf der Bewehrungsmatte 8 dargestellt. Ein zweiter Gitterträger 13a mit einer größeren Höhe befindet sich in einem seitlichen Abstand vom ersten Gitterträger 13 und ist zwecks der Verdeutlichung dargestellt, daß die Vorrichtung 1 auch unterschiedlich hohe Gitterträger 13,13a zu verarbeiten vermag. Die Gitterträger 13 sind parallel zu den Längseisen 11 auf der Bewehrungsmatte 8 und auch parallel zur oberen Traverse 3 angeordnet. Mehrere Gitterträger 13 liegen in Abständen voneinander in sich längs zu den Längseisen 11 erstreckenden Reihen.

Der Greifer 4 weist zwei einander gegenüberliegend nach unten ragende und sich leistenförmig parallel zu den Längseisen 11 erstreckende Halteelemente in Form von Klemmbacken 14 auf, die horizontal und quer zu den Längseisen 11 bzw. Gitterträgern 13 verstellbar sind. Diese Bewegungsrichtungen sind mit Doppelpfeilen 15 verdeutlicht. Vorzugsweise sind die Klemmbacken 14 an ihren unteren Enden mit aufeinanderzu vorspringenden Wülsten versehen, die jeweils eine Klemmleiste darstellen und die aufrechten Verbindereisen 13b zwischen sich klemmen. Dabei sind die Klemmbacken 14 vorzugsweise durch eine Federkraft elastisch aufeinanderzu vorgespannt. Die Federkraft ist so groß bemessen, daß der zwischen den Klemmbacken 14 eingeklemmte Gitterträger 13 sicher gehalten wird. Aufgrund der Beweglichkeit und elastischen Vorspannung passen sich die Klemmbacken 14 automatisch unterschiedlichen Breitenabmessungen bzw. Spitzenwinkeln der Gitterträger 13 an, die bei unterschiedlichen Höhen variieren.

Der Greifer 4 ist an einem von der oberen Traverse 3 mittig nach unten ragenden starren Stützarm 16 befestigt. Der Greifer 4 kann somit längs der vertikalen Z-Koordinate durch vertikales Verfahren der Traverse 3 abgesenkt und angehoben werden.

Die Schweißstempel 5 sind vertikal und in Längsrichtung der oberen Traverse 3 verschiebbar an letzterer gehalten. Hierzu dient ein auf der Traverse 3 längs verschiebbarer oberer Rahmen 17, an dessen Außenseitenflächen übereinander Führungsstücke 18 befestigt sind. In diesen Führungsstücken 18 sind zwei vertikale Führungsstangen 19 vertikal verschiebbar gelagert, an deren unteren Enden die Schweißstempel 5 befestigt sind. Jeder Schweißstempel 5 wird durch ein Winkelstück gebildet mit einem horizontalen Schenkelarm 5a und einem vertikalen Schenkelarm 5b. Die horizontalen Schenkelarme 5a sind aufeinanderzu gerichtet, so daß die vertikalen Schenkelarme 5b bezüglich der Führungsstangen 19 nach innen versetzt sind und einen geringeren Abstand voneinander aufweisen als diese. An den unteren Enden der Schenkelarme 5b sind Schweißleisten 5c befestigt, die von den Schwenkarmen 5b geringfügig aufeinander zu vorspringend angeordnet sein können. Die Länge 1 der vertikalen Schenkelarme 5b ist größer bemessen, als die Höhe h der höchsten Gitterträger 13a, so daß auch bei dichter Nebeneinanderanordnung von Gitterträgern 13,13a die sich längs den Längseisen 11 erstreckenden unteren der Längseisen 21a,21b der Gitterträger 13 mit den Schweißstempeln 5 erreicht werden können. Zur vertikalen Verschiebung der Schweißstempel 5 unabhängig von der oberen Traverse 3 dienen zwei Hydraulikzylinder 22, die im Bereich der Führungsstücke 18 am oberen Rahmen 17 abgestützt sind und mit ihren Kolbenstangen in nicht dargestellter Weise mit den Führungsstangen 19 oder den Schweißstempeln 5 verbunden sind.

Der Antrieb für den Rahmen 17 längs der oberen Traverse 3 umfaßt einen am Rahmen abgestützten Elektromotor 23 und einen an der Oberseite der Traverse 3 angeordneten Zahnriementrieb 24, mit dem der Elektromotor 23 in Antriebsverbindung steht.

Auf der unteren Traverse 6 ist ein unterer Rahmen 30 längs der unteren Traverse 6 und somit längs der Y-Koordinate verschiebbar geführt. An einer seitlich abstehenden Anbauplatte 25 am Rahmen 30 ist ein vertikal angeordneter Hydraulikzylinder 26 mit nach oben weisender Kolbenstange 27 befestigt, auf der die Schweißbrücke 7 befestigt ist. Für den Antrieb des unteren Rahmens 30 längs der unteren Traverse 6 ist ein Elektromotor 28 an der Anbauplatte 25 angeordnet, dessen Antriebswelle getriebemäßig mit einem an der dem Elektromotor 28 zugewandten Seitenfläche der unteren Traverse 6 angeordneten Zahnriementrieb 29 verbunden ist. Die Schweißbrücke 7 ist somit durch den Hydraulikzylinder 26 vertikal, nämlich längs der Z-Koordinate und durch den Elektromotor 28 längs der unteren Traverse 6 und somit längs der Y-Koordinate wahlweise verschiebbar.

Zur Steuerung der einzelen Arbeitsbewegungen der Vorrichtung 1 ist eine nicht dargestellte Steuereinrichtung vorgesehen. Ihr sind Wegmeßeinrichtungen zur Überwachung der Bewegungen der oberen Traverse 6 längs der X- und Z-Koordinate sowie des oberen Rahmens 17 längs der Y-Koordinate der Bewegungen der unteren Traverse 6 längs der X-Koordinate, und der Bewegungen des unteren Rahmens 30 längs der Y-Koordinate zugeordnet. Durch einen in die Steuereinrichtung integrierten Rechner lassen sich bestimmte Bewegungslängen programmieren, so daß der Greifer 17 und die Schweißbrücke 7 gezielt zu bestimmten Anordnungsstellen an der Bewehrungsmatte 8 und wieder zurück bewegt werden können. Die Bewegungen bzw. Wege werden jeweils auf eine O-Stelle bezogen, bezüglich der auch die Palette 2 in bestimmter Anordnung steht.

Zum Anordnen und Verbinden eines Gitterträgers 13 auf der Bewehrungsmatte 8 wird der Gitterträger 13 bei angehobenen Schweißstempeln 5 an einer Positionierstation ergriffen, über die Anordnungsstelle auf der Bewehrungsmatte 8 gefahren und abgesenkt. Gleichzeitig wird die Schweißbrücke 7 horizontal unter die gleiche Anordnungsstelle gefahren. Gleichzeitig mit dem Absenken des Greifers 17 oder mit dem nachfolgenden Absenken der Schweißstempel 5 wird die Schweißbrücke 7, die sich in der gleichen Position unterhalb der Palette 2 befindet, in die Unterstützungsposition gegen die Bewehrungsmatte 8, d.h. gegen die Quereisen 9 oder Längseisen 11 hochgefahren. Durch einen Stromstoß der integrierten Schweißvorrichtung werden die unteren Längseisen 21b des Gitterträgers 13 mit den Quereisen 9 der Bewehrungsmatte 8 verschweißt. Da die Klemmbacken 14 elastisch zusammengedrückt sind, kann der Greifer 14 einfach nach oben abgezogen werden, um einen neuen Gitterträger 13 aufzunehmen und zu positionieren. Nach Absenkung der Schweißbrücke 7 kann auch diese zur nächsten Anordnungsstelle gefahren werden.

## Patentansprüche

1. Vorrichtung zum Aufbringen und Verbinden von vorgefertigten Gitterträgern auf eine auf Abstützungen ruhende vorgefertigte Bewehrungsmatte,
**gekennzeichnet** durch
eine sich in Richtung der oben liegenden Längseisen (11) der Bewehrungsmatte (8) erstreckenden Träger (3), der quer zu den Längseisen (11) verfahrbar ist,
mindestens einen senkrecht zur Bewehrungsmatte (8) auf- und abfahrbaren Greifer (4) an dem Träger (3), der an seiner Unterseite ein Paar Halteelemente (14) zur Anlage an die Verbindungselemente (13b) der Gitterträger (13) zwischen Obergurt (21a) und Untergurte (21b) nahe dem Obergurt (21a) aufweist,
mindestens ein Paar von beiderseits des Trägers (3) angeordneten und parallel zu diesem verfahrbaren Schweißstempeln (5), die auf jeweils einen der Untergurte (21b) absenkbar sind, eine entsprechende Schweißbrücke (7), die unterhalb des Trägers (3) und unterhalb der Bewehrungsmatte (8) synchron zu den Schweißstempeln (5) parallel zu dem Träger (3) unter Umgehung etwaiger Abstützungen (12) verfahrbar ist und für jeden Schweißvorgang zur Anlage an die Quer- oder Längseisen (9,11) der Bewehrungsmatte (8) nach oben bewegbar ist, dort wo die Schweißstempel (5) an den auf die Quereisen (9) angedrückten Untergurte (21b) anliegen, und
eine Steuereinrichtung, die den Schweißvorgang jedesmal dann auslöst, wenn die Halteelemente (14) einen Gitterträger (13) gegen die Bewehrungsmatte (8) drücken, die Schweißstempel (5) in Anlage an den Untergurten (21b) sind und die Schweißbrücke (7) in korrespondierender Anlage an den Quer- oder Längseisen (9,11) der Bewehrungsmatte (8) ist.

2. Vorrichtung nach Anspruch 1,
dadurch **gekennzeichnet**
daß der Träger durch die Traverse (3) eines die Palette (2) übergreifenden Portalträgers (3) gebildet ist.

3. Vorrichtung nach Anspruch 1 oder 2,
dadurch **gekennzeichnet,**
daß der Greifer (4) starr mit dem Träger (3) verbunden ist und der Träger (3) vertikal verfahrbar ist.

4. Vorrichtung nach einem oder mehreren der vorhergehenden Ansprüche,
dadurch **gekennzeichnet,**
daß die Schweißstempel (5) höhenverstellbar an einem auf dem Träger (3) in dessen Längsrichtung verschiebbaren Rahmen (17) angeordnet sind.

5. Vorrichtung nach Anspruch 4,
dadurch **gekennzeichnet,**
daß der Rahmen (17) Vertikalführungen (18) aufweist, in denen nach oben verlängerte Führungsstangen (19) der Schweißstempel (5) vertikal verschiebbar gelagert sind.

6. Vorrichtung nach einem oder mehreren der vorhergehenden Ansrpüche,
dadurch **gekennzeichnet,**
daß die Schweißstempel (5) durch jeweils eine am Rahmen (17) abstützte Zylinderkolbeneinheit (22) vertikal verschiebbar sind.

7. Vorrichtung nach einem oder mehreren der vorhergehenden Ansprüche,
dadurch **gekennzeichnet,**
daß die Schweißstempel (5) jeweils durch ein Winkelstück mit einem horizontalen Schenkelarm (5a) und einem vertikalen Schenkelarm (5b) gebildet sind, wobei die horizontalen Schenkelarme (5a) vorzugsweise aufeinanderzu gerichtet sind, so daß die vertikalen Schenkelarme (5b) bezüglich der Führungsstangen (19) aufeinander zu versetzt sind.

8. Vorrichtung nach einem oder mehreren der vorhergehenden Ansprüche,
dadurch **gekennzeichnet,**
daß die Schweißstempel (5) bzw. die vertikalen Schenkelarme (5b) länger bemessen sind als die Höhe (h) des größten Gitterträgers (13a).

9. Vorrichtung nach einem oder mehreren der vorhergehenden Ansprüche,
dadurch **gekennzeichnet,**
daß unterhalb der Bewehrungsmatte (8) ein sich parallel zum oberen Träger (3) erstreckender unterer Träger (6) ebenfalls quer zu den Längseisen (11) der Bewehrungsmatte (8) verfahrbar angeordnet ist und auf dem unteren Träger (6) in dessen Längsrichtung verschiebbar geführt ein unterer Rahmen (30) angeordnet ist.

10. Vorrichtung nach Anspruch 9,
dadurch **gekennzeichnet,**
daß am unteren Rahmen (30) eine vertikale Zylinderkolbeneinheit (26) befestigt ist, auf deren nach oben weisender Kolbenstange (27) die Schweißbrücke (7) angeordnet ist.

11. Vorrichtung nach Anspruch 9 oder 10,
dadurch **gekennzeichnet,**
daß die Schweißbrücke (7) seitlich am unteren Rahmen (30) angeordnet ist.

12. Vorrichtung nach einem oder mehreren der vorhergehenden Ansprüche,
dadurch **gekennzeichnet,**
daß zwischen dem oberen Träger (3) sowie dem oberen Rahmen (17) und dem unteren Träger (6) sowie dem unteren Rahmen (30) jeweils eine Antriebsverbindung, insbesondere mit einem Elektromotor (23,28) und einem Zahnstangen- oder Zahnriementrieb (29), angeordnet ist.

13. Vorrichtung nach einem oder mehreren der vorhergehenden Ansprüche,
dadurch **gekennzeichnet,**
daß die Steuereinrichtung bei der Bewegung der Schweißstempel (5) und der Schweißbrücke (7) und der Auslösung jedes Schweißvorgangs taktgesteuert arbeitet.

14. Vorrichtung nach einem oder mehreren der vorhergehenden Ansprüche,
dadurch **gekennzeichnet,**
daß die Halteelemente durch sich über die Länge des Trägers (3) erstreckende Leisten oder Klemmbacken (14) gebildet sind.

15. Vorrichtung nach einem oder mehreren der vorhergehenden Ansprüche,
dadurch **gekennzeichnet,**
daß die Halteelemente Magnetelemente sind.

16. Vorrichtung nach einem oder mehreren der vorhergehenden Ansprüche,
dadurch **gekennzeichnet,**
daß insbesondere zur Verbindung von Gitterträgern (13,13a) unterschiedlicher Scheitelwinkel, jedoch gleicher Fußbreite, mit einer Bewehrungsmatte (8) die Halteelemente (14) unter gegeneinander wirkender Federvorspannung stehen.

## Claims

1. Apparatus for applying and connecting prefabricated lattice girders to a prefabricated reinforcement mat resting on supports,
characterised by
a carrier (3) extending in the direction of the longitudinal bars (11) - disposed uppermost - of the reinforcement mat (8), displaceable tranversely of the longitudinal bars (11),
at least one gripping member (4) on the carrier (3), raisable and lowerable perpendicularly with respect to the reinforcement mat (8), having on its underside a pair of holding elements (14) for abutment on the connecting elements (13b) of the lattice girders (13) between upper chord (21a) and lower chords (21b), in the vicinity of the upper chord (21a),
at least one pair of welding stamps (5) arranged to the two sides of the carrier (3) and displaceable parallel thereto, which stamps can be lowered onto respective lower chords (21b),
a corresponding welding bridge (7) which can be displaced beneath the carrier (3) and beneath the reinforcement mat (8), in synchronism with the welding stamps (5), parallel to the carrier (3), avoiding any supports (12) present, and for each welding operation can be moved upwards into abutment with the transverse or longitudinal bars (9, 11) of the reinforcement mat (8) where the welding stamps (5) abut the lower chords (21b) pressed against the transverse bars (9), and
a control device which initiates the welding operation each time when the holding elements (14) press a lattice girder (13) against the reinforcement mat (8), the welding stamps (5) are in abutment on the lower chords (21b) and the welding bridge (7) is in corresponding abutment on the transverse or longitudinal bars (9, 11) of the reinforcement mat (8).

2. Apparatus according to claim 1,
characterised in that,
the carrier is formed by the traverse (3) of a portal carrier (3) overlapping the pallet (2).

3. Apparatus according to claim 1 or 2,
characterised in that,
the gripping member (4) is rigidly connected with the carrier (3) and the carrier (3) is vertically displaceable.

4. Apparatus according to one or more of the preceding claims,
characterised in that,
the welding stamps (5) are arranged height adjustably on a frame (17) displaceable on the carrier (3) in the longitudinal direction thereof.

5. Apparatus according to claim 4,
characterised in that,
the frame (17) has vertical guides (18) in which upwardly extended guide bars (19) of the welding stamps (5) are vertically displaceably mounted.

6. Apparatus according to one or more of the preceding claims,
characterised in that,
the welding stamps (5) are vertically displaceable each by means of a piston and cylinder unit (22) supported on the frame (17).

7. Apparatus according to one or more of the preceding claims,
characterised in that,
the welding stamps (5) are formed each by an angle piece having a horizontal limb (5a) and a vertical limb (5b), the horizontal limbs (5a) preferably being directed towards one another so that, relative to the guide bars (19), the vertical limbs (5b) are offset towards one another.

8. Apparatus according to one or more of the preceding claims,
characterised in that,
the welding stamps (5), or the vertical limbs (5b), are greater in length than the height (h) of the largest lattice girder (13a).

9. Apparatus according to one or more of the preceding claims,
characterised in that,
beneath the reinforcement mat (8) there is arranged a lower carrier (6), extending parallel to the upper carrier (3), likewise displaceable transversely to the longitudinal bars (11) of the reinforcement mat (8), and a lower frame (30) is arranged on the lower carrier (6) guided displaceably in the longitudinal direction thereof.

10. Apparatus according to claim 9,
characterised in that,
a vertical piston and cylinder unit (26) is mounted on the lower frame (30), the welding bridge (7) being arranged on the upwardly directed piston rod (27) of that unit.

11. Apparatus according to claim 9 or 10,
characterised in that,
the welding bridge (7) is arranged to the side on the lower frame (30).

12. Apparatus according to one or more of the preceding claims,
characterised in that,
respective drive connections, in particular having an electric motor (23, 28) and a rack and pinion or toothed belt drive (29), are arranged between the upper carrier (3) and the upper frame (17) and between the lower carrier (6) and the lower frame (30).

13. Apparatus according to one or more of the preceding claims,
characterised in that,
for the movement of the welding stamp (5) and the welding bridge (7), and the initiation of each welding operation, the control device operates under timing control.

14. Apparatus according to one or more of the preceding claims,
characterised in that,
the holding elements are formed by bars or clamp jaws (14) extending over the length of the carrier (3).

15. Apparatus according to one or more of the preceding claims,
characterised in that,
the holding elements are magnetic elements.

16. Apparatus according to one or more of the preceding claims,
characterised in that,
in particular for connecting lattice girders (13, 13a) of different vertex angles but similar base width with a reinforcement mat (8) the holding elements (14) are subject to spring biassing effective against one another.

## Revendications

1. Dispositif d'application et d'assemblage de poutres en treillis préfabriquées sur un grillage d'armature préfabriqué reposant sur des supports,
**caractérisé** par :
- un élément porteur (3) s'étendant dans le sens des fers longitudinaux (11) du grillage d'armature (8) situés au dessus, cet élément pouvant être entraîné transversalement aux fers longitudinaux (11),
- au moins un grappin (4) pouvant être entraîné perpendiculairement au grillage d'armature (8) de haut en bas et de bas en haut sur l'élément porteur (3), présentant sur son côté inférieur une paire d'éléments de préhension (14) destinés à s'appliquer sur les éléments de liaison (13b) de la poutre en treillis (13) entre la membrure supérieure (21a) et la membrure inférieure (21b) près de la membrure supérieure (21a),
- au moins une paire de poinçons de soudage (5) disposés de part et d'autre de l'élément porteur (3) et pouvant être entraînés parallèlement à celui-ci, pouvant être descendus respectivement sur une des membrures inférieures (21a),
- un pont de soudage (7) pouvant être entraîné sous l'élément porteur (3) et sous le grillage d'armature (8) en synchronisme avec les poinçons de soudage (5), parallèlement à l'élément porteur (3), en contournant les supports (12) éventuellement présents, et étant, pour chaque opération de soudage, mobile vers le haut pour s'appliquer contre les fers transversaux ou longitudinaux (9, 11) du grillage d'armature (8) à l'endroit où les poinçons de support (5) s'appliquent sur les membrures inférieures (21b) serrées contre les fers transversaux (9), et
- un dispositif de commande qui déclenche l'opération de soudage chaque fois que les éléments de préhension (14) serrent une poutre en treillis (13) contre le grillage d'armature (8), que les poinçons de soudage (5) sont en appui sur les membrures inférieures (21b) et que le pont de soudage (7) est en appui correspondant contre les fers transversaux ou longitudinaux (9, 11) du grillage d'armature (8).

2. Dispositif selon la revendication 1, caractérisé en ce que l'élément porteur est constitué par la traverse (3) d'un support en portique (3) enjambant la palette (2).

3. Dispositif selon la revendication 1 ou 2, caractérisé en ce que le grappin (4) est relié de manière rigide à l'élément porteur (3) et en ce que l'élément porteur (3) est mobile en sens vertical.

4. Dispositif selon une ou plusieurs des revendications précédentes, caractérisé en ce que les poinçons de soudage (5) sont disposés en étant réglables en hauteur sur un châssis (17) pouvant coulisser sur l'élément porteur (3) dans le sens longitudinal de celui-ci.

5. Dispositif selon la revendication 4, caractérisé en ce que le châssis (17) présente des guidages verticaux (18) dans lesquels sont montées, en pouvant coulisser verticalement, des tiges de guidage (19) des poinçons de soudage (5) prolongées vers le haut.

6. Dispositif selon une ou plusieurs des revendications précédentes, caractérisé en ce que les poinçons de soudage (5) peuvent coulisser verticalement au moyen d'un vérin (22) prenant appui sur le châssis (17).

7. Dispositif selon une ou plusieurs des revendications précédentes, caractérisé en ce que les poinçons de soudage (5) sont constitués chacun par une pièce coudée avec une branche horizontale (5a) et une branche verticale (5b), les branches horizontales (5a) étant de préférence orientées l'une vers l'autre, de telle sorte que les branches verticales (5b) sont décalées, l'une par rapport à l'autre, par rapport aux tiges de guidage (19).

8. Dispositif selon une ou plusieurs des revendications précédentes, caractérisé en ce que les poinçons de soudage (5) et/ou les branches verticales (5b) sont d'une longueur plus grande que la hauteur (h) de la poutre en treillis (13) la plus grande.

9. Dispositif selon une ou plusieurs des revendications précédentes, caractérisé en ce que sous le grillage d'armature (8) est disposé un élément porteur inférieur (6) s'étendant parallèlement à l'élément porteur supérieur (3) et étant également mobile transversalement aux fers longitudinaux (11) du grillage d'armature (8), et en ce qu'un châssis inférieur (30) est disposé sur l'élément porteur inférieur (6) en étant guidé de manière coulissante dans le sens longitudinal de celui-ci.

10. Dispositif selon la revendication 9, caractérisé en ce qu'un vérin (26) vertical est fixé au châssis inférieur (30), le pont de soudage (7) étant disposé sur la tige de piston (27) de ce vérin, dirigée vers le haut.

11. Dispositif selon la revendication 9 ou 10, caractérisé en ce que le pont de soudage (7) est disposé latéralement sur le châssis inférieur (30).

12. Dispositif selon une ou plusieurs des revendications précédentes, caractérisé en ce qu'une liaison d'entraînement, en particulier avec un moteur électrique (23, 28) et une transmission à crémaillère ou à courroie crantée (24, 29) est disposée respectivement entre l'élément porteur supérieur (3) ainsi que le châssis supérieur (17) et l'élément porteur inférieur (6) ainsi que le châssis inférieur (30).

13. Dispositif selon une ou plusieurs des revendications précédentes, caractérisé en ce que le dispositif de commande fonctionne en cadence lors du mouvement des poinçons de soudage (5) et du pont de soudage (7) et du déclenchement de chaque opération de soudage.

14. Dispositif selon une ou plusieurs des revendications précédentes, caractérisé en ce que les éléments de préhension sont constitués par des barres ou des mâchoires de serrage (14) s'étendant sur la longueur de l'élément porteur (3).

15. Dispositif selon une ou plusieurs des revendications précédentes, caractérisé en ce que les éléments de préhension sont des éléments magnétiques.

16. Dispositif selon une ou plusieurs des revendications précédentes, caractérisé en ce que, en particulier pour l'assemblage de poutres en treillis (13, 13a) ayant des angles au sommet différents, mais une même largeur de base, avec un grillage d'armature (8), les éléments de préhension (14) sont soumis à une précontrainte élastique tendant à les serrer l'un contre l'autre.
